# EUROPEAN PATENT SPECIFICATION

(11) **EP 3 547 824 B1**
(45) Date of publication and mention of the grant of the patent: **20.12.2023**
(21) Application number: 17875381.0
(22) Date of filing: 14.11.2017
(51) Int. Cl.: A01G 18/20, A01G 18/22, A01G 18/30, A01G 18/60

(54) **METHOD AND DEVICE FOR PASTEURIZATION OF A SUBSTRATE USEABLE FOR GROWING MUSHROOMS**
VERFAHREN UND VORRICHTUNG ZUR PASTEURISIERUNG EINES SUBSTRATS FÜR DIE PILZZUCHT
PROCÉDÉ ET DISPOSITIF DE PASTEURISATION DE SUBSTRAT UTILISABLE POUR LA CULTURE DE CHAMPIGNONS

(30) Priority: 30.11.2016 SE 1651575
(43) Date of publication of application: 09.10.2019
(73) Proprietor: Biosteam AB, 937 93 Burträsk (SE)
(72) Inventor: LARSSON, Robert, 931 46 Skellefteå (SE); XIONG, Shaojun, 907 38 Umeå (SE); ATTERHEM, Lars, 937 93 Burträsk (SE)
(74) Representative: Zacco Sweden AB
(86) International application number: PCT/SE2017/051129
(87) International publication number: WO 2018/101872

(56) References cited:
- EP-A2- 0 590 256
- CA-C- 1 275 956
- KR-A- 20140 021 857
- US-A- 3 717 953
- US-A- 3 820 278
- US-A- 3 820 278
- US-A- 3 916 987
- US-A- 3 916 987
- US-A- 3 942 969
- US-A- 4 233 266
- US-A- 4 233 266

## Description

### TECHNICAL FIELD

The present invention relates to a method of growing mushrooms, in which, in one step, a substrate in which mushrooms are to grow is pasteurized. The present invention also relates to a device configured for growing of mushrooms. In particular the method and device according to the invention relates to a method and a device for growing of mushrooms at an industrial scale.

### BACKGROUND ART

Growing of mushrooms at an industrial scale has for many reasons become of large interest. A normal procedure for growing of mushrooms comprises substrate preparation, bagging (a process in which the substrate is arranged in enclosures in the form of bags or bottles), pasteurization, inoculation, incubation, fruitification, harvest and mushroom drying.

Mushrooms have to grow on certain substrates. In order to get economic benefits from cultivating mushrooms, mushroom mycelium is often kept as monocrop, i.e. being the only fast growing life form in the substrate. Many microbial organisms in the substrate may compete with the mycelium and slow (or prevent) full colonization of desired mushroom mycelia. Thermal sterilization (i.e. autoclaving at 121 °C) or pasteurization (60-100 °C) of the substrates is therefore often applied with steam as one of the necessary processes (for an industrial production of many edible mushrooms. The heat for sterilization or pasteurization is today mostly supplied using coal (e.g. in China) or other fossil fuels and the process is both energy consuming and environmentally-unfriendly.

Conventionally high temperature saturated steam (= 100 °C) with atmospheric pressure is in practice major approach of the substrate sterilization/pasteurization for variable mushrooms whose substrates conventionally require high temperature treatment, such as shiitake (*Lentinula erodes*), enokitake (*Flammulina velutipes*) and wood ear (*Auricularia auricular*). In many cases, the substrate packed in containers (e.g. plastic bottles or bags) has to be bathed in a chamber with controlled steam of about 100 °C for 8-20 hours (depending on species and pasteurization facilities), to be able to secure the substrate is clean from aggressive microbes. When steaming, condensate may form a film on surface of the container and likely isolate the substrate from heating, or a pocket of cold air stays inside and cannot escape and preventing steam and heat entering properly (Kurtzman 2005, 2010). As a result, a long time heating up the substrate is needed and energy efficiency is low (< 36 %, Tippayawong et al. 2011; it is < 11 % in China, Xiong et al. unpublished data).

A precondition for the substrate to remain sterile even after the autoclave process is that it is packaged in an appropriate manner. For this enclosures such as bottles or special bags for example according to EN 868 CE are well known. One suitable encloseure can be air permeable but not water permeable, another suitable enclosure can be impermeable to both water and air. An air permeable enclosure can allows for continuous diffusion of water vapor thereby reducing the moisture in the encloseure. Another suitable enclosure for packing the substrate can be a plastic bag with a number of gas exchange surfaces or membranes which are impervious to outside organisms thereby avoiding contamination of a nutrient substrate by outside organisms. The term enclosure as used herein refers to any known enclosure suitable for use in the sterilization of substrate for mushroom.

Although pressurised steam in autoclave (121 °C) can reduce the time and increase the effectiveness of sterilization, high costs for energy and facilities as well as maintenance have to be paid. Pressurised steam may enhance the corrosion on the equipment due to condensate and shorten lives of the equipment and add maintenance costs. In addition, microbial infections may occur when and where it is possible around the facilities and operation areas where condensate water exists. Furthermore, after the sterilization, it is very difficult to recover the steam because of a contamination in the steam during the processing. The steam condensate has to be drained off as waste hot water.

There are several other methods for the pasteurization, such as hot water bathing/cooking, alkaline soaking and composting, among others (Contreras 2004, Kurtzman 2010), but most of these treatments are directed to supporting small mushroom growers. These methods may also cause some environmental consequences such as waste water and odor air. US 3 820 278 A discloses a device for growing mushrooms from pasteurization of compost, spawning/inculation of the substrate to harvesting the mushrooms.

It is therefore an object of the invention to present an alternative method and device for the growing of mushrooms that enable a more efficient but yet reliable pasteurization of substrates and that are suitable for application in an industrial scale.

It is a further object of the invention to present a method and a device for the growing of mushrooms that enables efficient use of components used for the pasteurization also for other steps included in the growing of mushrooms.

### SUMMARY OF THE INVENTION

The object of the invention is achieved by means of a method as specified in claim 1.

Surprisingly, it has been found that, by adopting this method, a relatively short time, less than 8 hours, is needed for the purpose of sufficiently pasteurizing said substrate for mushroom sorts that normally would require either longer pasteurization time and/or the use of steam as the means for performing the pasteurization.

According to one embodiment, the relative humidity of the air in the chamber is controlled, preferably such that it is below 99 % (<99 %), i.e. comparable to the climate in a dry sauna. The humidity of the substrate may be valued by comparing the difference in humidity between air that is to pass the substrate and air that has passed the substrate. According to one embodiment, air is forced to enter the chamber, pass through the chamber (and thereby through the substrate provided in the chamber) and to leave the chamber. Evaluation of the moisture of the substrate may then preferably be done by measuring and comparing the relative humidity of the air entering the chamber and the humidity of the air leaving the chamber. There may also be alternative ways of evaluating the moisture of the substrate, for example by measuring the weight of the substrate before and during the pasteurization.

According to one embodiment, the method comprises the step of inoculating the substrate with mycelium of any of the following mushrooms: shiitake, wood ear (Judas-ear) enokitake. The substrates used for growing of these mushrooms normally, according to prior art, require sterilization at 121 °C or pasteurization by steaming with higher temperature than 90 °C. By applying the method according to the invention, a substantially more efficient pasteurization step is achieved.

According to one embodiment, the method comprises the steps of incubation of the inoculated substrate, fruitification of mushrooms and harvesting of mushrooms, and, after harvesting, the further step of drying the harvested mushrooms, wherein the harvested mushrooms are arranged in a chamber and subjected to air with a temperature of 45-65 °C. According to one embodiment the method includes that the air is circulated through the chamber and the relative humidity thereof is controlled such that it is below 99 %.

According to one embodiment the method includes that the chamber in which the harvested mushrooms are dried is the same chamber as the one in which the substrate is subjected to the pasteurization step. The use of air as the medium by means of which heat is transferred to the substrate during pasteurization results in no condensate or waste water or the like in the chamber that would prevent efficient drying of mushrooms in said chamber.

According to one embodiment of the method, during the step in which said substrate is subjected to air for the purpose of pasteurizing, the substrate is continuously moved through the chamber from an inlet of the chamber to an outlet thereof. According to one embodiment, air is circulated through the chamber in an opposite direction.

The object of the invention is also achieved by means of a device as specified in claim 12.

According to one embodiment, the device is characterised in that said chamber is provided with an inlet and an outlet and that there is provided a transportation device in said chamber for transporting said enclosures filled with said substrate through said chamber from said inlet to said outlet.

According to one embodiment, the device is characterised in that said air heater device comprises a heat exchanger in which heat from condensate of steam generated by a combined heat and power plant or from a hotwater boiler is transferred to air that is to be circulated by said blower device through said chamber.

According to one embodiment, the device is characterised in that said air humidity control device comprises an air humidifier and an air humidity measurement device, and that there is provided a control unit which controls the operation of the air humidifier on basis of the air humidity measured by the air humidity measurement device.

Further features and advantages of the present invention will be presented in the following detailed description of embodiments.

### BRIEF DESCRIPTION OF THE DRAWINGS

Fig. 1 is a schematic representation of a device according to the invention configured for the growing of mushrooms.
Fig. 2 is a block diagram representing the steps of growing mushrooms according to the invention.
Fig. 3 is a laboratory chamber used for pasteurization, and
Fig. 4 Shows Yields of Shiitake (Lentinula edodes) and Judas-ear (Auricularia auricula) mushrooms gown on the substrate pasteurized by autoclaving (121 °C steam with 2 bar pressure) vs. hot air (75 - 100 °C with atmospheric pressure). Bars refer to mean ± standard error. Birch stem biomass is major components (80 %). Mushroom yield refers to fresh weigh (g/bag, about 90% moisture).

### DETAILED DESCRIPTION

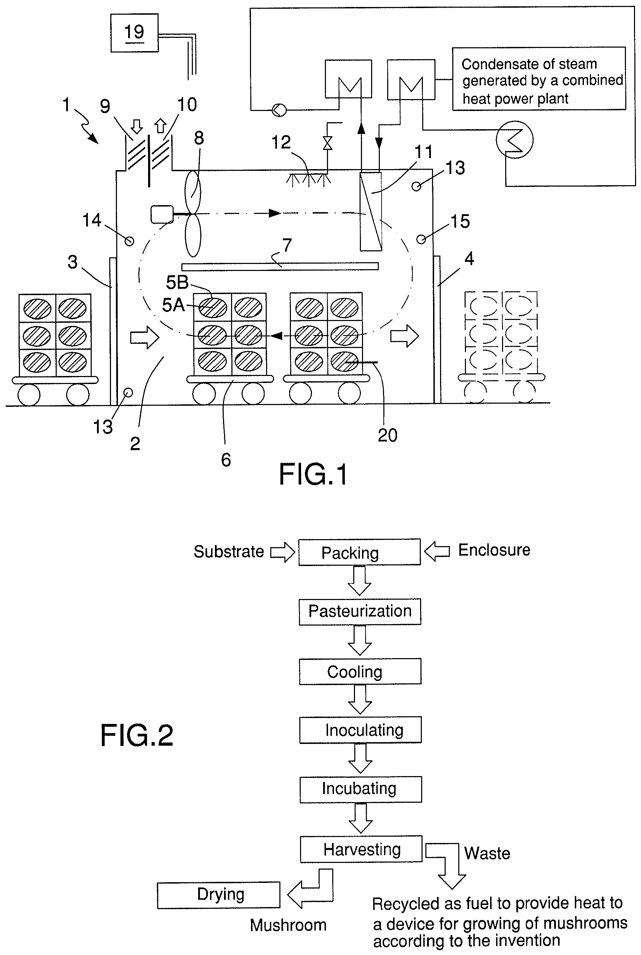

Fig. 1 shows a device according to the present invention configured for the growing of mushrooms. The device comprises a housing 1 that defines a chamber 2 therein. The housing 1 is provided with an inlet 3 and an outlet 4 for entrance and exit respectively of mushroom growing substrate 5A that, in one step of a method according to the present invention, is to be pasteurized inside said chamber 2. The substrate 5A is enclosed in enclosures 5B. Inside the chamber 2 there is provided a path from said inlet 3 to said exit 4 along which a transportation device 6 is configured to transport said substrate 5A enclosed in said enclosures 5B. The device thus defines a device for enabling a continuous process in which substrate 5A is continuously fed from said inlet 3 to said outlet 4 during a pasteurization step. The term "continuously" as referred to herein also includes stepwise forward motion of the substrate along said path. Preferably, there are provided doors or the like, by means of which said inlet 3 and outlet 4 can be closed during periods of a process step, for example the pasteurization step, when no substrate enters or exits the chamber through the inlet 3 and the outlet 4 respectively.

The chamber 2 is subdivided by an intermediate wall or ceiling 7 which enables efficient circulation of air through the chamber. For the purpose of generating a flow of air through the chamber 2 there is provided an air blower 8, here formed by one or more fans. In the embodiment shown, the intermediate wall 7 divides the chamber in a first part, here an upper part, and a second part, here a lower part, wherein said parts communicate with each other in the region of said inlet 3 and outlet 4. The air blower 8 is arranged in the first part of the chamber 2, and the air is forced to flow through the first part, into the second part at an end of the chamber, preferably adjacent said outlet 4, through the second part and back to the first part at the opposite end of the chamber, preferably adjacent to the inlet 3. The first part forms a channel through which the air is forced to flow and in which the substrate is positioned during the pasteurization step. The substrate 5A should be arranged such that the air actually flows through the substrate and not just around the substrate. Therefore, the substrate 5A is arranged such that it covers a major part of a cross sectional area of said channel, preferably more than 75 % of that cross sectional area, and even more preferably more than 90 % of that cross sectional area

An air inlet 9 is provided, which enables air from the surrounding atmosphere to be introduced into the chamber 2. The air inlet 9 is provided adjacent to the air blower device 8. Preferably, there is provided a controllable valve or the like (not shown) in the air inlet, by means of which the amount of air introduced into the chamber 2 can be controlled. There is also provided an air outlet 10 by means of which air can evacuated from the chamber 2. Preferably, the air outlet is provided with a controllable valve or the like (not shown) by means of which the evacuation of air through the air outlet 10 is controlled. By controlling the introduction and evacuation of air to and from the chamber, the temperature and humidity of the air inside the chamber 2 can be rapidly and efficiently regulated.

There is also provided a heat exchanger 11 or battery, by means of which air to be circulated through the chamber 2 is heated. In the embodiment shown here, the heat exchanger 11 is positioned inside the chamber 2, more precisely in the first part of the chamber 2 downstream the air blower device 8 such that air that has been introduced into the chamber 2 through the air inlet 9 is blown by the air blower device towards said heat exchanger. In a preferred embodiment, independent of how or where the heat exchanger 11 is positioned, heat from condensate of steam generated by a combined heat and power plant is transferred via said heat exchanger 11 to the air that is circulated by said blower device 8 through said chamber 2.

Accordingly, there is provided piping by means of which the heat exchanger 11 is connected to such a power plant. The power plant could, preferably, be a biomass combustion plant.

In order to control the humidity of the air that is circulated through the chamber 2 during, for example, a pasteurization step there is provided an air humidity control device that comprises an air humidifier 12 and an air humidity measurement device 13. There is also provided a control unit (not shown) which controls the operation of the air humidifier 12 on basis of the air humidity measured by the air humidity measurement device 13.

In order to control the temperature of the air that is circulated through the chamber 2 there is provided at least one temperature measurement device 14 in the chamber 2. In the embodiment shown, there is provided a first temperature measurement device 14 adjacent to and upstream the air inlet 9, and there is provided another temperature measurement device 15 in an opposite end of the first part of the chamber 2. Alternative other positioning of the temperature measuring device or devices is of course also feasible.

A device primarily aimed for continuous transportation of substrate through the chamber 2 during pasteurization has now been described with reference to the figure. It should however be understood that the principles of the invention are also applicable to a batch-like process in which a batch of substrate is positioned in the chamber and subjected to the same heat treatment by air as described for the continuous process described hereinabove. In such a case one of the inlet 3 and the outlet 4 could of course be omitted since said batch could enter and exit the chamber 2 from one and the same opening.

According to one embodiment, the invention includes a method of producing mushrooms, in which a substrate in which mushrooms are to grow is pasteurized in the chamber 2 of the above-described device, said method comprising the following steps,
- providing a substrate 5A in a the chamber 2, said substrate comprising broad leaf tree biomass as a major component and being arranged in an enclosures 5B, and, for the purpose of pasteurizing the substrate 5A,
- introducing air with a temperature of 65-90 °C into said chamber 2 and subjecting said substrate 5A to said air for a given period of time to pasteurize the substrate, preferably a time that allows said temperature at the center point inside the substrate package remain 1-2 hours and preferably does not exceed 8 hours in total for a 1.5-kg bag starting heating from 20 °C, wherein the air is circulated through the chamber 2 and the humidity thereof is controlled such that it is within a predetermined range, and wherein the pressure in the chamber 2 is atmospheric pressure.

The substrate 5A may comprise sawdust of birch, wheat grain, wheat bran: ratios 80/10/10 based; and ca 1 % CaCO3; all based on dry weight. A moisture content of about 65 % (63-67 %) is preferred. During pasteurization in the chamber, the moisture content of the substrate is evaluated or measured, and controlled by control of the humidity of the air. The sawdust of Birch can be substituted by other hardwood tree species such as oak, beech, cherry etc. The wheat grain and bran are basically used as nutrients (sources of nitrogen) and can be substituted by Barley etc. Straws can be another material to substitute sawdust in above mentioned recipe, but the nutrient part (grain or bran) should remain the same.

The encloseure which can be air-permeable are designed as bags in which the substrate 5A is housed during pasteurization. They are put into wagons that enter the chamber 2 through the inlet 3, travel across the chamber 2 for a predetermined time, not exceeding 8 hours, and exit the chamber 2 through the outlet 4. A temperature of 65 - 90 °C is applied for, at the longest, 8 hours, which is about the total heating process and includes heating up both the chamber and the substrate 5A in the enclosure 5B to the temperature needed for pasteurization. In reality it is important to remain at 65-90 °C about 1-2 hours from the time when the core temperature of an individual substrate has reached said temperature range. The core temperature is referred to as the temperature at the central point inside a plastic bag/bottle, i.e. the core of the substrate inside said enclosure 5B. Experiments by the applicant suggest that it may take 3-5 hours for heating up before reaching the core temperature needed, depending on the bag/bottle size, chamber temperature setting and airflow speed. The device for growing mushrooms according to the present invention is controlled by a computer 19. The core temperature can be measured by a probe 20 in the substrate or measured as an average by a number of probes in different substrates.

The relative humidity of the air in the chamber is controlled such that it is within a range of below 99 %.

Then follows the step of inoculating the substrate with mycelium of any of the following mushrooms: shiitake, wood ear (Judas-ear), enokitake.

Then follows the steps of incubation of the inoculated substrate, fruitification of mushrooms and harvesting of mushrooms, and, after harvesting, the further step of drying the harvested mushrooms, wherein the harvested mushrooms are arranged in the above-described chamber and subjected to air with a temperature of 45-65 °C for a predetermined time.

In Fig. 2 the block diagram schematically represents the steps of growing mushrooms according to the invention wherein a first step comprise packing the substrate 5A into an enclosure 5B for example a bag of polypropene, a second step comprise pasteurizing the substrate 5A, a third step comprise cooling the substrate 5A, a fourth step comprise inoculating the pasteurized substrate 5A with mycelia of the desired mushrooms, a fifth step comprise incubating the inoculated pasteurized nutrient medium. A desired incubation condition could be: three to five months in a temperature of 22-24 °C, and a relative humidity of 70-90 %, a sixth step of the present invention comprises harvesting the edible mushroom followed by an optional drying of the mushroom with air of 45-60 °C in a device for growing mushrooms accordning to the invention.

### Examples

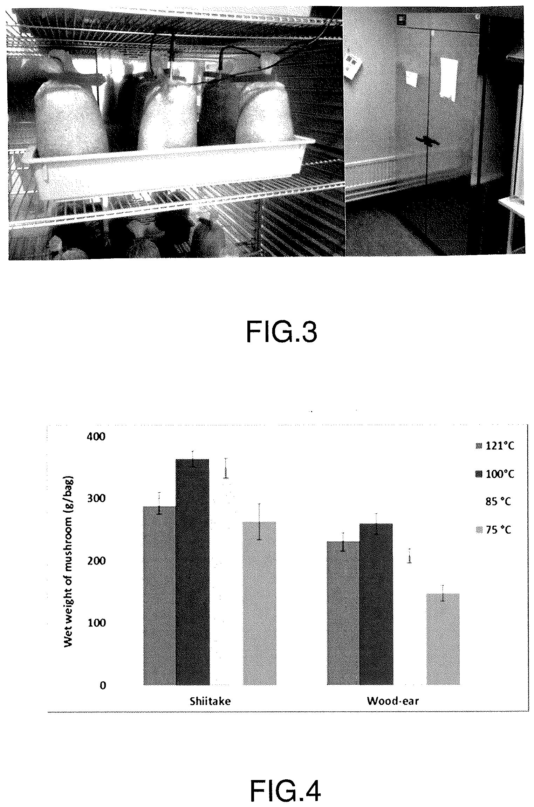

The new method is based on researches and many laboratory tests. Below is an example showing a pasteurization of growing substrate (mainly birch) for shiitake and wood ear. Tests have been performed in which a substrate containing water (65 %), birch sawdust (28 %), wheat-bran (7 %) and CaCO3 (0.4 %) was packed in enclosure 5B bags made of polypropene (PP) with a volume of 2.1-2.5 liter and weight of 1 kg (wet mass) each. A laboratory oven corresponding to the device shown in fig. 3 and described hereinabove was used for the pasteurization experiments.

A housing with a chamber volume of approximately 0.75 m³ was used. The bags were placed into a plastic basket that were introduced into the chamber. The substrate was positioned in the chamber such that it covered approximately up to 50-60 % of a cross sectional area of a channel during the pasteurization process. Air inside the chamber was circulated. An air flow speed in the range of 50-70 % of chamber capacity per hour was thereby obtained inside the chamber. The air inside the chamber was heated by a heat exchanger. Air temperature was measured by means of temperature measurement devices arranged in the neighbourhood of the inlet and the outlet respectively. The core temperature, i.e. the temperature in the center of substrate bag, was measured through a probe in a couple of the bags and used as a major control parameter. When the core temperature reached the designed level, for example 75 °C, and kept this temperature for 1-2 hours, the heating was shut down. Then the substrate was going to a cooling stage. After hours of cooling till the substrate temperature reached ≤ 30 °C, the substrate was evacuated from the chamber and transported to a sterile-hood where inoculation of shiitake or wood-ear mycelia was applied. The thus inoculated substrate was subjected to incubation for about 3-5 months in a room with a temperature of 22-24 °C and a relative humidity of approximately 70 % (atmospheric air).

It was shown that by the end of incubation, mushrooms were fruited well in the substrates pasteurized by hot-air. About 5-7 days earlier fruitification and higher yields were achieved in those bags pasteurized with 85-100 °C hot air than the ones autoclaved using steam at 121 °C (Fig 4).

After fruitification and harvesting of mushrooms grown on the substrate, the mushrooms were introduced into the same chamber as the one in which the substrate was pasteurized. In said chamber, the mushrooms were subjected to a drying process in which air with a temperature of approximately 45-60 °C was forced to circulate through the chamber.

The invention is defined by the features specified in the appended claims.

## Claims

1. A method in which a substrate in which mushrooms are to grow is pasteurized, said method comprising the steps of;
- providing a substrate (5A) in a chamber (2),
- introducing air with a temperature of 90 °C or below into said chamber and subjecting said substrate to said air for a for a given time to pasteurize the substrate, wherein the air is circulated through the chamber and the humidity thereof is controlled such that it is within a predetermined range,
**characterized in that**
- the air is introduced with a temperature of 65 °C - 90 °C
- the substrate comprising broad leaf tree biomass as a major component,
- the substrate is arranged in an enclosure (5B) for the purpose of pasteurizing the substrate, and wherein the pressure in the chamber is atmospheric pressure.

2. A method accordoing to claim 1, wherein the period of time to pasteurize the substrate (5A) that allows said temperature at the center point inside the substrate package remain 1-2 hours.

3. A method according to any of the claims 1 - 2, wherein the relative humidity of the air in the chamber (2) is controlled such that it is within a range below 99 %.

4. A method according to any of the claims 1 - 3, further comprising the steps of,
- measuring the core temperature, i.e. the temperature in the center of the substrate enclosure (5B), and
- subjecting the substrate enclosure to the tempered air until the core temperature of the substrate has reached a predetermined temperature level,
- maintaining the said temperature level during a predetermined time.

5. A method according to claim 4, comprising the steps of,
- subjecting the substrate enclosure (5B) to the air until the core temperature of the substrate has reached a predetermined temperature of at least 65 °C, and
- maintaining the predetermined core temperature for at least one hour before cooling the substrate

6. A method according to claim 5, wherein the predetermined core temperature is measured by a probe (20) in the substrate (5A) or measured as an average of a number of probes in different substrates.

7. A method according to any of claims 1 - 6, comprising the steps of,
- inoculating the pasteurized substrate (5A) with mycelium of any of the following mushrooms: shiitake, wood ear (Judas-ear) or enokitake.

8. A method according to claim 7, comprising the step of,
- cooling the substrate (5A) until the core temperature of the substrate has reached ≤ 30 °C before inoculation of the substrate.

9. A method according to any of the claims 7 or 8, comprising the steps of,
- incubation of the inoculated substrate (5A), fruitification of mushrooms and harvesting of mushrooms, and, after harvesting, the further step of drying the harvested mushrooms, wherein the harvested mushrooms are arranged in a chamber (2) and subjected to circulating air with a temperature of 45-65 °C.

10. A method according to claim 9, wherein the chamber (2) in which the harvested mushrooms are dried is the same chamber as the one in which the substrate (5A) is subjected to the pasteurization step.

11. A method according to any one of claims 1 - 10, wherein, during the step in which said substrate (5A) is subjected to air for the purpose of pasteurizing, the substrate is continuous process were the substrate is continuously moved through the chamber (2) from an inlet (3) of the chamber to an outlet (4) thereof.

12. A device configured for growing of mushrooms, said device comprising
- a chamber (2), configured to house mushroom growing substrate (5A),
- an air blower device (8) configured to circulate air through said chamber (2),
- an air heater device (11) configured to heat air that is to be circulated through said chamber (2) to a temperature of 90 °C or below, and
- an air humidity control device (12, 13) configured to control the relative humidity of the air circulated through the chamber (2) within a predetermined range,
**characterized in that**,
the air heater device (11) is configured to heat air that is to be circulated through said chamber (2) to a temperature of 65 °C - 90 °C, and in the that device further comprises enclosures (5B) in which the substrate is provided, wherein the pressure in the chamber (2) is atmospheric pressure.

13. A device according to claim 12, wherein in that said chamber (2) is provided with an inlet (3) and an outlet (4) and that there is provided a transportation device in said chamber (2) for transporting said enclosures (5B) filled with said substrate (5A) through said chamber (2) from said inlet (3) to said outlet (4).

14. A device according to any of claims 12 - 13, wherein the said air heater device (11) comprises a heat exchanger in which heat from condensate of steam generated by a combined heat and power plant is transferred to air that is to be circulated by said blower device through said chamber (2).

15. A device according to any one of claims 12 - 14, wherein said air humidity control device (12, 13) comprises an air humidifier (12) and an air humidity measurement device (13), and that there is provided a control unit (19) such as a computer which controls the operation of the air humidifier (12) on basis of the air humidity measured by the air humidity measurement device (13).

## Patentansprüche

1. Verfahren, bei dem ein Substrat, in dem Pilze zu züchten sind, pasteurisiert wird, wobei das Verfahren die folgenden Schritte umfasst:
- Bereitstellen eines Substrats (5A) in einer Kammer (2),
- Einleiten von Luft mit einer Temperatur von 90 °C oder weniger in die Kammer und Beaufschlagen des Substrats mit der Luft für eine bestimmte Zeit, um das Substrat zu pasteurisieren, wobei die Luft in der Kammer umgewälzt wird und deren Feuchtigkeit so geregelt wird, dass sie innerhalb eines vorgegebenen Bereichs liegt,
**dadurch gekennzeichnet, dass**
- die Luft mit einer Temperatur von 65 °C - 90 °C eingeleitet wird
- das Substrat Laubbaum-Biomasse als Hauptbestandteil umfasst
- das Substrat in einem Gehäuse (5B) zum Zweck der Pasteurisierung des Substrats angeordnet ist und wobei der Druck in der Kammer dem Luftdruck entspricht.

2. Verfahren nach Anspruch 1, wobei der Zeitraum zum Pasteurisieren des Substrats (5A), der das Aufrechterhalten der Temperatur am Mittelpunkt im Inneren der Substratpackung zulässt, 1-2 Stunden beträgt.

3. Verfahren nach einem der Ansprüche 1-2, wobei die relative Luftfeuchtigkeit in der Kammer (2) so geregelt wird, dass sie innerhalb eines Bereichs unter 99 % liegt.

4. Verfahren nach einem der Ansprüche 1-3, ferner umfassend die folgenden Schritte:
- Messen der Kerntemperatur, d. h. der Temperatur in der Mitte des Substratgehäuses (5B), und
- Beaufschlagen des Substratgehäuses mit der temperierten Luft, bis die Kerntemperatur des Substrats ein vorgegebenes Temperaturniveau erreicht hat,
- Aufrechterhalten des Temperaturniveaus während einer vorgegebenen Zeit.

5. Verfahren nach Anspruch 4, umfassend die folgenden Schritte:
- Beaufschlagen des Substratgehäuses (5B) mit der Luft, bis die Kerntemperatur des Substrats eine vorgegebene Temperatur von mindestens 65 °C erreicht hat, und
- Aufrechterhalten der vorgegebenen Kerntemperatur für mindestens eine Stunde vor dem Abkühlen des Substrats.

6. Verfahren nach Anspruch 5, wobei die vorgegebene Kerntemperatur durch eine Sonde (20) im Substrat (5A) gemessen wird oder als Durchschnitt einer Anzahl von Sonden in verschiedenen Substraten gemessen wird.

7. Verfahren nach einem der Ansprüche 1-6, umfassend den folgenden Schritt:
- Beimpfen des pasteurisierten Substrats (5A) mit Myzel eines der folgenden Pilze: Shiitake, Holzohrpilz (Judasohr) oder Enokitake.

8. Verfahren nach Anspruch 7, umfassend den folgenden Schritt:
- Abkühlen des Substrats (5A), bis die Kerntemperatur des Substrats ≤ 30 °C erreicht hat, bevor das Substrat beimpft wird.

9. Verfahren nach einem der Ansprüche 7 oder 8, umfassend die folgenden Schritte:
- Inkubation des beimpften Substrats (5A), Fruchtbildung von Pilzen und Ernten von Pilzen und, nach dem Ernten, der weitere Schritt des Trocknens der geernteten Pilze, wobei die geernteten Pilze in einer Kammer (2) angeordnet und mit Umluft mit einer Temperatur von 45-65 °C beaufschlagt werden.

10. Verfahren nach Anspruch 9, wobei die Kammer (2), in der die geernteten Pilze getrocknet werden, dieselbe Kammer ist, in der das Substrat (5A) dem Pasteurisierungsschritt unterzogen wird.

11. Verfahren nach einem der Ansprüche 1-10, wobei das Substrat während des Schritts, in dem das Substrat (5A) zum Zweck der Pasteurisierung mit Luft beaufschlagt wird, einem kontinuierlichen Prozess unterzogen wird, bei dem das Substrat kontinuierlich durch die Kammer (2) bewegt wird von einem Einlass (3) der Kammer zu einem Auslass (4) derselben.

12. Vorrichtung, die für die Pilzzucht konfiguriert ist, wobei die Vorrichtung Folgendes umfasst:
- eine Kammer (2), die dazu konfiguriert ist, ein Pilzzuchtsubstrat (5A) aufzunehmen,
- eine Luftgebläsevorrichtung (8), die dazu konfiguriert ist, Luft in der Kammer (2) umzuwälzen,
- eine Lufterwärmungsvorrichtung (11), die dazu konfiguriert ist, Luft, die in der Kammer (2) umzuwälzen ist, auf eine Temperatur von 90 °C oder weniger zu erwärmen, und
- eine Luftfeuchtigkeitsregelungsvorrichtung (12, 13), die dazu konfiguriert ist, die relative Feuchtigkeit der in der Kammer (2) umgewälzten Luft innerhalb eines vorgegebenen Bereichs zu regeln,
**dadurch gekennzeichnet, dass**
die Lufterwärmungsvorrichtung (11) dazu konfiguriert ist, Luft, die in der Kammer (2) umzuwälzen ist, auf eine Temperatur von 65 °C - 90 °C zu erwärmen, und dass die Vorrichtung ferner Gehäuse (5B) umfasst, in denen das Substrat bereitgestellt wird, wobei der Druck in der Kammer (2) dem Luftdruck entspricht.

13. Vorrichtung nach Anspruch 12, wobei die Kammer (2) mit einem Einlass (3) und einem Auslass (4) ausgestattet ist, und in der Kammer (2) eine Transportvorrichtung zum Transportieren der Gehäuse (5B), gefüllt mit dem Substrat (5A), durch die Kammer (2) vom Einlass (3) zum Auslass (4) vorgesehen ist.

14. Vorrichtung nach einem der Ansprüche 12-13, wobei die Lufterwärmungsvorrichtung (11) einen Wärmetauscher umfasst, in dem Wärme aus Kondensat von Dampf, der von einem Blockheizkraftwerk erzeugt wird, auf Luft übertragen wird, die von der Gebläsevorrichtung in der Kammer (2) umzuwälzen ist.

15. Vorrichtung nach einem der Ansprüche 12-14, wobei die Luftfeuchtigkeitsregelungsvorrichtung (12, 13) einen Luftbefeuchter (12) und eine Luftfeuchtigkeitsmessvorrichtung (13) umfasst, und eine Regelungseinheit (19) wie beispielsweise ein Computer vorgesehen ist, der den Betrieb des Luftbefeuchters (12) auf Basis der von der Luftfeuchtigkeitsmessvorrichtung (13) gemessenen Luftfeuchtigkeit regelt.

## Revendications

1. Procédé de pasteurisation d'un substrat utilisable pour la culture de champignons, ledit procédé comprenant les étapes suivantes :
- la fourniture d'un substrat (5A) dans une chambre (2),
- l'introduction d'air ayant une température de 90 °C ou moins dans ladite chambre et la soumission ledit substrat audit air pendant une durée donnée pour pasteuriser le substrat, dans lequel de l'air circule à travers la chambre et son humidité est régulée de sorte qu'elle se situe dans une plage prédéterminée,
**caractérisé en ce que**
- l'air est introduit à une température de 65 °C à 90 °C
- le substrat comprenant de la biomasse de feuillus comme composant majeur,
- le substrat est disposé dans une enceinte (5B) pour la pasteurisation du substrat, et dans lequel la pression dans la chambre est la pression atmosphérique.

2. Procédé selon la revendication 1, dans lequel la période de pasteurisation du substrat (5A) qui permet ladite température au point central à l'intérieur de l'emballage du substrat dure 1 à 2 heures.

3. Procédé selon l'une quelconque des revendications 1 à 2, dans lequel l'humidité relative de l'air dans la chambre (2) est régulée de sorte qu'elle se situe dans une plage inférieure à 99 %.

4. Procédé selon l'une quelconque des revendications 1 à 3, comprenant en outre les étapes suivantes :
- la mesure de la température à coeur, c'est-à-dire la température au centre de l'enceinte du substrat (5B), et
- la soumission de l'enceinte de substrat à l'air tempéré jusqu'à ce que la température à cœur du substrat ait atteint un niveau de température prédéterminé,
- le maintien dudit niveau de température pendant une durée prédéterminée.

5. Procédé selon la revendication 4, comprenant les étapes suivantes :
- la soumission de l'enceinte de substrat (5B) à l'air jusqu'à ce que la température à cœur du substrat atteigne une température prédéterminée d'au moins 65 °C, et
- le maintien de la température à cœur prédéterminée pendant au moins une heure avant le refroidissement du substrat.

6. Procédé selon la revendication 5, dans lequel la température à cœur prédéterminée est mesurée par une sonde (20) dans le substrat (5A) ou mesurée comme moyenne d'un nombre de sondes dans différents substrats.

7. Procédé selon l'une quelconque des revendications 1 à 6, comprenant les étapes suivantes :
- inoculation du substrat pasteurisé (5A) avec du mycélium de l'un des champignons suivants : shiitake, oreille de Judas ou enokitake.

8. Procédé selon la revendication 7, comprenant l'étape suivante :
- refroidissement du substrat (5A) jusqu'à ce que la température à cœur du substrat ait atteint ≤ 30 °C avant l'inoculation du substrat.

9. Procédé selon l'une quelconque des revendications 7 ou 8, comprenant les étapes suivantes :
- incubation du substrat inoculé (5A), fructification de champignons et récolte de champignons et, après la récolte, l'étape supplémentaire de séchage des champignons récoltés, dans lequel les champignons récoltés sont disposés dans une chambre (2) et soumis à de l'air en circulation avec une température de 45 à 65 °C.

10. Procédé selon la revendication 9, dans lequel la chambre (2) où les champignons récoltés sont séchés est la même chambre que celle où le substrat (5A) est soumis à l'étape de pasteurisation.

11. Procédé selon l'une quelconque des revendications 1 à 10, dans lequel, pendant l'étape où ledit substrat (5A) est soumis à l'air pour la pasteurisation, le substrat est un processus continu où le substrat est déplacé continuellement à travers la chambre (2) depuis une entrée (3) de la chambre jusqu'à une sortie (4) de celle-ci.

12. Dispositif conçu pour la culture de champignons, ledit dispositif comprenant
- une chambre (2), conçue pour loger un substrat de culture de champignons (5A),
- un dispositif souffleur d'air (8) conçu pour faire circuler de l'air à travers ladite chambre (2),
- un dispositif de chauffage d'air (11) conçu pour chauffer l'air qui doit circuler à travers ladite chambre (2) à une température de 90 °C ou moins, et
- un dispositif de régulation d'humidité de l'air (12, 13) conçu pour réguler l'humidité relative de l'air circulé à travers la chambre (2) dans une plage prédéterminée,
**caractérisé en ce que**,
le dispositif de chauffage d'air (11) est conçu pour chauffer de l'air qui doit circuler à travers ladite chambre (2) à une température de 65 °C à 90 °C, et **en ce que** ce dispositif comprend en outre
des enceintes (5B) où le substrat est fourni, dans lequel la pression dans la chambre (2) est la pression atmosphérique.

13. Dispositif selon la revendication 12, dans lequel en ce que ladite chambre (2) est dotée d'une entrée (3) et d'une sortie (4) et qu'un dispositif de transport dans ladite chambre (2) est fourni pour transporter lesdites enceintes (5B) remplies dudit substrat (5A) à travers ladite chambre (2) depuis ladite entrée (3) jusqu'à ladite sortie (4).

14. Dispositif selon l'une quelconque des revendications 12 et 13, dans lequel ledit dispositif de chauffage d'air (11) comprend un échangeur de chaleur où de la chaleur provenant d'un condensat de vapeur généré par une centrale thermique et électrique combinée est transférée à de l'air qui doit circuler par ledit dispositif souffleur à travers ladite chambre (2).

15. Dispositif selon l'une quelconque des revendications 12 à 14, dans lequel ledit dispositif de régulation d'humidité de l'air (12, 13) comprend un humidificateur d'air (12) et un dispositif de mesure d'humidité de l'air (13), et en ce qu'une unité de commande (19) est fournie, telle qu'un ordinateur qui régule le fonctionnement de l'humidificateur d'air (12) sur la base de l'humidité de l'air mesurée par le dispositif de mesure d'humidité de l'air (13).
